# EUROPEAN PATENT SPECIFICATION

(11) **EP 3 701 799 B1**
(45) Date of publication and mention of the grant of the patent: **26.06.2024**
(21) Application number: 18869722.1
(22) Date of filing: 14.09.2018
(51) Int. Cl.: A23F 3/40, A23F 3/16, A23L 2/52, A23L 2/56

(54) **TEA FLAVOR IMPROVING AGENT AND PACKAGED TEA BEVERAGE CONTAINING SAME**
MITTEL ZUR VERBESSERUNG DES TEEGESCHMACKS UND VERPACKTES TEEGETRÄNK MIT DIESEM MITTEL
AGENT AMÉLIORANT L'ARÔME DU THÉ ET BOISSON AU THÉ CONDITIONNÉE LE CONTENANT

(30) Priority: 25.10.2017 JP 2017206432
(43) Date of publication of application: 02.09.2020
(73) Proprietor: Mitsubishi Gas Chemical Company, Inc., Tokyo 100-8324 (JP)
(72) Inventor: IKEMOTO, Kazuto, Niigata-shi Niigata 950-3112 (JP)
(74) Representative: Müller-Boré & Partner Patentanwälte PartG mbB
(86) International application number: PCT/JP2018/034113
(87) International publication number: WO 2019/082547

(56) References cited:
- WO-A1-2008/035686
- WO-A1-2008/035686
- WO-A1-2015/019498
- JP-A- 2013 169 152
- JP-A- 2015 057 980
- JP-A- 2017 175 966
- JP-A- 2017 175 966
- US-A1- 2017 119 836

## Description

### Technical Field

The present invention relates to use of a tea flavor improving agent and a packaged tea beverage comprising the same.

### Background Art

A wide variety of beverages have been launched owing to diversification of consumer taste or rising health consciousness. Tea-based beverages are highly preferred and are also expected to have health effects. Among the preferences, ease of drinking is also evaluated, and many methods for adjusting taste have been proposed. In response to rising health consciousness in recent years, it is also expected that health functions are imparted to tea. There has been a demand for an active ingredient that can conveniently improve the flavor or aftertaste of tea by addition in a small amount and has no taste in itself. However, no such material has been known.

Citation List JP 2017 175966 discloses the use of pyrroloquinoline quinone (PQQ) to provide tea flavor in non tea beverages. JP 2015 057980 discloses improvement of the taste of packaged tea product by a flavor improver isoeugenol. JP 2013 169152 discloses improvement of the taste of packaged tea product by a flavor improver methyl butanal.

### Non Patent Literature

Non Patent Literature 1: Biochem J 307, 331-333 (1995)

### Summary of Invention

The invention relates to the use of a salt of pyrroloquinoline quinone as a tea flavor improving agent and is defined by the claims.

### Technical Problem

An object of the present inventors is to develop a tea flavor enhancing agent and a packaged tea beverage having tea flavor improved with the tea flavor enhancing agent.

### Solution to Problem

Tea has been reported to contain a trace amount of pyrroloquinoline quinone on a ng/ml scale (see, for example, Non Patent Literature 1). However, it has not been known that pyrroloquinoline quinone disodium salt alone has no taste, and pyrroloquinoline quinone has influence on flavor.

The present inventors have conducted diligent studies to attain the object, and consequently completed the present invention by finding that a salt of pyrroloquinoline quinone improves tea flavor.

Specifically, the present invention encompasses the following aspects of the invention.

1. Use of a salt of pyrroloquinoline quinone as a tea flavor improving agent comprising 10 to 210 mg/L of the salt of pyrroloquinoline quinone as an active ingredient per liter of tea. 2. Use according to 1, wherein the salt of pyrroloquinoline quinone is pyrroloquinoline quinone disodium salt. 3. Use according to 1 or 2, wherein the tea is green tea, semi-fermented tea or black tea. 4. Use according to any one of 1 to 3, wherein the tea flavor improving agent is comprised in a packaged tea beverage. 5. Use according to 4, wherein the packaged tea beverage is produced by adding the salt of pyrroloquinoline quinone to an extract from a tea leaf.

### Advantageous Effects of Invention

The present invention can provide a packaged tea beverage having light and delicate taste of a tea-based beverage and aftertaste improved so as to be refreshing. Thus, the packaged tea beverage of the present invention is easy to drink and can be continuously consumed over a long period and as such, can be expected to sufficiently produce physiological effects brought about by a salt of pyrroloquinoline quinone.

### Description of Embodiments

Hereinafter, the mode for carrying out the present invention (hereinafter, referred to as the "present embodiment") will be described in detail.

According to the first embodiment, the present invention provides the use of a salt of pyrroloquinoline quinone as a tea flavor improving agent comprising 10 to 210 mg/L of the salt of pyrroloquinoline quinone as an active ingredient per liter of tea.

The improvement in tea flavor as used herein means improvement in general taste of tea flavor, particularly, improvement in aftertaste so as to be refreshing, for example, attainment of light and delicate taste and clean taste and/or decrease in astringency and bitterness.

The "aftertaste" refers to a "feeling that remains in the mouth" described in JIS Z 8144: 2004. Alternatively, the aftertaste may be evaluated on the basis of a CPA (Change of membrane Potential by Adsorption) value using a taste sensor.

In the present embodiment, the amount of the salt of pyrroloquinoline quinone serving as an active ingredient may be 10 to 210 mg per liter of a tea beverage.

The pyrroloquinoline quinone (hereinafter, also referred to as "PQQ") used in the present embodiment is a substance having a structure represented by the general formula (1):

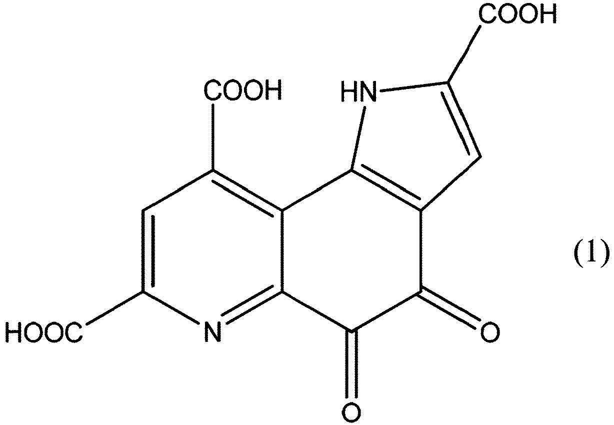

In the present embodiment, a salt of PQQ is used. Particularly, an alkali metal salt of PQQ is often used. Particularly, alkali metal salts having one to three alkali metal ions attached are known. The alkali metal salt is preferably sodium or potassium salt, more preferably disodium salt. This substance is often used as hydrated crystals. The pyrroloquinoline quinone used may have such a crystal form.

In the present embodiment, examples of the tea targeted by the tea flavor improving agent include beverages that are to be drunk by brewing leaves of tea trees (tea leaves), which are evergreen trees of the family *Theaceae,* or leaves of plants other than the tea trees or cereals. Such a tea beverage encompasses all of fermented tea, semi-fermented tea, and unfermented tea. Specific examples of the tea beverage include, but are not particularly limited to, Japanese tea (e.g., green tea and barley tea), black tea, Chinese tea (e.g., Chinese green tea and oolong tea), and Hojicha (roasted green tea). Among them, colored tea such as green tea, semi-fermented tea, or black tea is preferably used as the tea beverage, and, particularly, semi-fermented tea or black tea having a reddish color is more preferred, because pyrroloquinoline quinone assumes a red color.

According to the second embodiment, the present invention provides a packaged tea beverage comprising the use of a salt of pyrroloquinoline quinone as tea flavor improving agent.

In the packaged tea beverage the concentration of the salt of PQQ may be more than 5 mg/L and less than 220 mg/L. The packaged tea beverage can improve tea flavor provided that the concentration of the salt of PQQ is a concentration within this range. Particularly, a feeling of cleanness can be improved. The concentration of the salt of PQQ is 10 to 210 mg/L, more preferably 20 to 100 mg/L, further preferably 40 to 80 mg/L. This range is also preferred for exerting functionality, and the concentration in this range offers umami of tea.

The salt of PQQ can be added in the form of a powder or an aqueous solution. The salt of PQQ is usually soluble.

The packaged tea beverage can contain an acidulant. Examples of the acidulant include, but are not particularly limited to, ascorbic acid, citric acid, gluconic acid, succinic acid, tartaric acid, lactic acid, fumaric acid, malic acid and their alkali metal salts (e.g., sodium salt and potassium salt). These acidulants can be used alone or in combination of two or more thereof.

The content of the acidulant in the packaged tea beverage is not particularly limited and is appropriately adjusted, for example, within a range of 0.01 to 3% by mass according to a final product.

The packaged tea beverage when having strong bitterness, can contain a sweetener as a component masking the taste. Examples of the sweetener include, but are not particularly limited to, naturally derived carbohydrates, glycerols, and artificial sweeteners. These sweeteners can be used alone or in combination of two or more thereof. Examples of the carbohydrates include, but are not particularly limited to, monosaccharides, oligosaccharides, complex polysaccharides, and sugar alcohols. One or more members selected from glucose, sucrose, fructose, glucose-fructose syrup, high-fructose corn syrup and erythritol are preferably contained therein. Examples of the glycerols include, but are not particularly limited to, polyhydric alcohols such as glycerol. Examples of the artificial sweeteners include, but are not particularly limited to, high-intensity sweeteners such as aspartame, sucralose, and saccharin.

The content of the sweetener can be appropriately determined according to its type. The content of the sweetener in the packaged tea beverage is preferably 0.0001 to 20% by mass, more preferably 0.001 to 18% by mass, particularly preferably 0.01 to 15% by mass.

The packaged tea beverage may be blended, if necessary, with one or two or more in combination of additives such as an antioxidant, a flavor, dyes, an emulsifier, a preservative, a seasoning, a gum, an oil, a vitamin, an amino acid, fruit juice extracts, vegetable extracts, nectar extracts, a pH adjuster (except for acidic phosphate and condensed phosphate), and quality stabilizer.

Examples of the packaged tea beverage include, but are not particularly limited to, green tea beverages, oolong tea beverages, and black tea beverages. The tea beverage to be blended is preferably oolong tea, black tea, or the like, which is semi-fermented or fermented tea having a reddish color, because pyrroloquinoline quinone assumes a red color.

The pH (20°C) of the packaged tea beverage is preferably 2 to 7 from the viewpoint of the stability of flavor.

The method for producing the packaged tea beverage of the present embodiment comprises the step of adding a salt of pyrroloquinoline quinone to an extract from a tea leaf (tea extract), or a commercially available tea beverage.

The tea extract is obtained by extraction such as kneader extraction or column extraction from tea using hot water or a water-soluble organic solvent, and refers to a material that has undergone neither concentration nor purification operation. Also, an organic acid or an organic acid salt such as sodium ascorbate may be added in advance to water for extraction.

The tea is not particularly limited and can be broadly divided into, for example, unfermented tea, semi-fermented tea, and fermented tea according to a processing method thereof. Examples of the unfermented tea include green tea such as Sencha (green tea of middle grade), Bancha (coarse tea), Tencha (milling tea), Kamairicha (pan-fried tea), Kukicha (twig tea), Bocha (stem tea), and Mecha (bud tea). Examples of the semi-fermented tea include oolong tea such as Tieguanyin, Pouchong, Huang Jin Gui, and Wuyi. Examples of the fermented tea include black tea such as Darjeeling tea, Assam tea, and Sri Lanka tea. These teas can be used alone or in combination of two or more thereof.

The packaged tea beverage can be provided in a form packed in a usual packaging container such as a molded container composed mainly of polyethylene terephthalate (so-called PET bottle), a metal can, a composite paper container with metal foil or a plastic film, or a bottle.

The packaged tea beverage can be produced by, for example, but is not particularly limited to, packing a tea beverage in a container such as a metal can, followed by heat sterilization, if possible, under sterilization conditions stipulated by a law or a regulation (in Japan, Food Sanitation Act) that should be applied thereto. If the container, such as a PET bottle or a paper container, cannot be retort-sterilized, an exemplary method that can be adopted involves sterilizing the container in advance under sterilization conditions equivalent to those described above, for example, at a high temperature for a short time using a plate heat exchanger or the like, then cooling the container to a given temperature, and packing a tea beverage in the container. Alternatively, the packed container may be aseptically blended and packed with an additional component. Furthermore, a possible operation involves heat-sterilizing the container at acidic pH and then aseptically bring the pH back to neutral pH, or heat-sterilizing the container at neutral pH and then aseptically bring the pH back to acidic pH.

### Examples

The pyrroloquinoline quinone disodium salt used in the present Examples was BioPQQ(Registered Trademark) manufactured by Mitsubishi Gas Chemical Co., Inc.

### [Example 1] Bottled green tea

A PET bottle containing 525 ml of "Namacha" manufactured by Kirin Beverage Co., Ltd. (raw material: green tea, raw tea leaf extract, and vitamin C) was used as a green tea beverage. To this bottle, 20 mg of pyrroloquinoline quinone disodium salt was added. The resultant was preserved in a refrigerator for 1 week. Then, sensory evaluation was carried out as described below. The results were comprehensively evaluated.

### (Sensory evaluation)

A drink test was conducted by 5 panelists randomly selected from people trained as to sensory evaluation. The panelists were constituted by 20 to 60 years old men and women. The evaluation was made as to clean taste, retronasal aroma, richness, and bitterness according to the criterial given below. Here, the retronasal aroma is afterflavor sustained after swallowing of a sample and means smell passing from the mouth to the nose.

### [Evaluation criteria]

A reference before the addition of the salt of PQQ was given a score of 3. Modifications after the addition were given the following scores.

5: excellent, 4: good, 3: fair, 2: poor, 1: bad.

An average point from the 5 panelists was calculated.

### (Evaluation results)

Clean taste: 5, retronasal aroma: 3, richness: 3, bitterness: 3

### [Comprehensive evaluation]

Comprehensive improvement in tea taste was evaluated as follows on the basis of the respective assessments of clean taste, retronasal aroma, richness, and bitterness.

AAA: very favorable, AA: favorable, A: fair, B: unfavorable.

The results were indicated by the most common assessment among the 5 panelists. The comprehensive evaluation before the addition of PQQ was given a score of A.

### (Evaluation results)

Comprehensive evaluation: AAA

The addition of the pyrroloquinoline quinone disodium salt attained light and delicate taste and clean taste while maintaining the flavor and deliciousness of green tea. The aftertaste was also clean.

### [Comparative Example 1] Aqueous solution of pyrroloquinoline quinone disodium salt

20 mg of pyrroloquinoline quinone disodium salt was dissolved in 525 mL of water to prepare a homogeneous solution. Since this aqueous solution had no taste and lacked a feeling of refreshment and umami unique to tea, the aqueous solution was not evaluated by panelists. The results of Example 1 and the results of this Comparative Example demonstrated that pyrroloquinoline quinone disodium salt is effective for modifying tea taste.

### [Examples 2 to 7 and Comparative Examples 2 to 6]

In the same way as in Example 1, pyrroloquinoline quinone disodium salt was added to green tea, sensory evaluation was carried out, and the results were comprehensively evaluated. The results are shown in Table 1.

**[Table 1]**

| Example | PQQ disodium salt concentration (mg/L) | Clean taste | Retronasal aroma | Richness | Bitterness | Comprehensive evaluation |
|---|---|---|---|---|---|---|
| 2 | 10 | 5 | 3 | 3 | 3 | AAA |
| 3 | 20 | 5 | 3 | 3 | 3 | AAA |
| 4 | 40 | 5 | 3 | 3 | 3 | AAA |
| 5 | 120 | 5 | 3 | 3 | 3.2 | AAA |
| 6 | 160 | 5 | 2.8 | 2.8 | 3.2 | AAA |
| 7 | 200 | 5 | 2.8 | 2.8 | 3.2 | AAA |

| Comparative Example | | | | | | |
|---|---|---|---|---|---|---|
| 2 | 5 | 3 | 3 | 3 | 3 | A |
| 3 | 220 | 5 | 2.8 | 2.4 | 3.2 | A |
| 4 | 240 | 5 | 2.4 | 2.4 | 3.2 | A |
| 5 | 280 | 5 | 2 | 1.2 | 3.4 | B |
| 6 | 400 | 5 | 2 | 1.2 | 3.4 | B |

As the salt of PQQ used in the present embodiment was elevated above a predetermined concentration, the taste became clean and bitterness was also reduced.

### [Example 8] Change of green tea and measurement in taste sensor

A PET bottle containing 525 ml of Oi Ocha manufactured by Ito En, Ltd. (raw material: green tea and vitamin C) was used. As a result of adding thereto 20 mg of pyrroloquinoline quinone disodium salt, the taste became light and delicate and became clean. Even when the bottled green tea was changed, the taste was similarly modified. The modification of the taste of this sample was measured in a taste sensor by Japan Food Research Laboratories by request.

The taste sensor used was taste sensing system TS-5000Z manufactured by Intelligent Sensor Technology, Inc. The potential of a reference solution was defined as zero. Difference in potential from a sample solution was measured as initial taste (sourness, bitterness or other unpleasant tastes, astringency or harshness, umami, and saltiness). Then, the sensor was lightly washed. The potential of the reference solution was measured again, and difference in potential was measured as aftertaste (bitterness, astringency, and umami or richness).

Specific steps are as follows.

Step (1): First, a taste sensor is dipped in a solution called reference solution (0.3 mmol/L tartaric acid solution containing 30 mmol/L potassium chloride) to obtain membrane potential Vr.

Step (2): Next, when the taste sensor is dipped in a sample solution, the membrane potential is changed to Vs through the interaction with a taste substance. The change in membrane potential "Vs - Vr" obtained here is called "relative value" of the first sensor output, and corresponds to initial taste such as sourness or saltiness.

Step (3): Then, the taste sensor is simply prewashed with the reference solution.

Step (4): The taste sensor is dipped again in the reference solution to obtain membrane potential Vr'. When a bitter substance, an astringent substance, or the like is adsorbed on lipid membrane surface in the step (3) by dipping in the same reference solution as that in the step (1), the membrane potential becomes Vr'. The change in membrane potential "Vr' -Vr" obtained here is called "CPA value" (CPA = Change of membrane Potential by Adsorption) of the second sensor output, and corresponds to aftertaste such as bitterness or astringency.

Step (5): In order to completely remove the taste substance adsorbed on the lipid membrane surface, the lipid membrane surface is thoroughly washed with an alcohol washing solution.

Values measured in 5 types of taste sensors were converted to each taste items. The obtained values are shown in Table 2. Sourness of -13 or less, saltiness of -6 or less, and the other items of 0 or less are tasteless. Hence, sourness was excluded from evaluation for the sample in this test.

**[Table 2]**

| | Initial taste | | | | | Aftertaste | | |
|---|---|---|---|---|---|---|---|---|
| Presence or absence of PQQ addition | Sourness | Bitterness or other unpleasant tastes | Astringency or harshness | Umami | Saltiness | Bitterness | Astringency | Umami or richness |
| Absent | -35.69 | 4.88 | 16.26 | 16.78 | -2.65 | 0.39 | 8.02 | 2.88 |
| Present | -35.93 | 4.69 | 16.26 | 16.84 | -1.59 | 0.35 | 8.14 | 3.00 |

The values obtained without the addition of the salt of PQQ were defined as 1. The values converted from the values obtained by the addition of the salt of PQQ are shown in Table 3. People can perceive difference in taste when the converted values were changed by 20% or more. The values obtained without the addition of the pyrroloquinoline quinone disodium salt were defined as 0. The difference was indicated.

**[Table 3]**

| | Initial taste | | | | | Aftertaste | | |
|---|---|---|---|---|---|---|---|---|
| Presence or absence of PQQ addition | Sourness | Bitterness or other unpleasant tastes | Astringency or harshness | Umami | Saltiness | Bitterness | Astringency | Umami or richness |
| Absent | 0 | 0 | 0 | 0 | 0 | 0 | 0 | 0 |
| Present | 0 | -0.19 | 0 | 0.06 | 1.06 | -0.04 | 0.12 | 0.12 |

Although the numerical value of "saltiness" seemed to be elevated by the addition of PQQ, this does not mean that the taste became salty, but indicates that the taste of green tea became thick as a whole. As a result of actually drinking the PQQ-supplemented green tea tested in the taste sensor and confirming its taste, relative reduction in "astringency and bitterness" was perceived, and clean taste was attained.

### [Example 9] Green tea with Gyokuro (refined green tea)

A PET bottle containing 500 ml of "Gyokuro Iri Ryokucha" manufactured by POKKA SAPPORO Food & Beverage Ltd. (raw material: Sencha, Gyokuro, Maccha (powdered green tea), and vitamin C) was used. 20 mg of pyrroloquinoline quinone disodium salt was added thereto. The taste became light and delicate and became clean. In the same way as in Example 1, sensory evaluation was carried out, and the results were comprehensively evaluated.
Evaluation by panelists: clean taste: 5, retronasal aroma: 3, richness: 3, bitterness: 3, comprehensive evaluation: AAA

### [Example 10] Semi-fermented tea

A PET bottle containing 500 ml of "Oolong Tea" manufactured by Suntory Beverage & Food Ltd. (raw material: oolong tea and vitamin C) was used. 20 mg of pyrroloquinoline quinone disodium salt was added thereto. The taste became light and delicate and became clean, as compared with an unsupplemented sample. Bitterness of aftertaste characteristic of tea leaves was improved.

Improvement in feeling of cleanness in taste and improvement in aftertaste were observed in semi-fermented tea, as in green tea. In the same way as in Example 1, sensory evaluation and comprehensive evaluation were carried out.
Evaluation by panelists: clean taste: 5, retronasal aroma: 3, richness: 3, bitterness: 2.4, comprehensive evaluation: AAA

### [Example 11] Hojicha

A PET bottle containing 500 ml of "Kaga Bo Hojicha" manufactured by POKKA SAPPORO Food & Beverage Ltd. (raw material: Sencha and vitamin C) was used. 20 mg of pyrroloquinoline quinone disodium salt was added thereto. In the same way as in Example 1, sensory evaluation was carried out, and the results were comprehensively evaluated.
Evaluation by panelists: clean taste: 5, retronasal aroma: 3, richness: 3, bitterness: 3, comprehensive evaluation: AAA

The tea flavor improving effect of pyrroloquinoline quinone was still good for tea that underwent a heat treatment step.

### [Example 12] Fermented tea: black tea

A PET bottle containing 500 ml of "Gogo no Kocha Oishi Muto" manufactured by Kirin Beverage Co., Ltd. (raw material: black tea (73% Darjeeling tea), flavor, and vitamin C) was used. 20 mg of pyrroloquinoline quinone disodium salt was added thereto. In the same way as in Example 1, sensory evaluation was carried out, and the results were comprehensively evaluated.
Evaluation by panelists: clean taste: 5, retronasal aroma: 3, richness: 3, bitterness: 3, comprehensive evaluation: AAA

Improvement in feeling of cleanness in taste was also observed in fermented tea.

### [Example 13] Concentration measurement of salt of PQQ

HPLC was performed under the following conditions.
Shimadzu LC-2010, column: YMC-Pack ODS-A
Detection wavelength: 259 nm, mobile phase: 30 mM acetic acid-70 mM ammonium acetate
Column temperature: 40°C

A PET bottle containing 525 ml of Oi Ocha manufactured by Ito En, Ltd. (raw material: green tea and vitamin C) was used. 100 mg of pyrroloquinoline quinone disodium salt was added thereto. In the same way as in Example 1, sensory evaluation was carried out, and the results were comprehensively evaluated.
Evaluation by panelists: clean taste: 5, retronasal aroma: 3, richness: 3, bitterness; 3, comprehensive evaluation: AAA

The taste became light and delicate and became clean.

## Claims

1. Use of a salt of pyrroloquinoline quinone as a tea flavor improving agent comprising 10 to 210 mg/L of the salt of pyrroloquinoline quinone as an active ingredient per liter of tea.

2. Use according to claim 1, wherein the salt of pyrroloquinoline quinone is pyrroloquinoline quinone disodium salt.

3. Use according to claim 1 or 2, wherein the tea is green tea, semi-fermented tea or black tea.

4. Use according to any one of claims 1 to 3, wherein the tea flavor improving agent is comprised in a packaged tea beverage.

5. Use according to claim 4, wherein the packaged tea beverage is produced by adding the salt of pyrroloquinoline quinone to an extract from a tea leaf.

## Patentansprüche

1. Verwendung eines Salzes von Pyrrolochinolinchinon als Mittel zur Verbesserung des Teegeschmacks, umfassend 10 bis 210 mg/L des Salzes von Pyrrolochinolinchinon als ein aktiver Bestandteil pro Liter Tee.

2. Verwendung nach Anspruch 1, wobei das Salz von Pyrrolochinolinchinon Pyrrolochinolinchinon-Dinatriumsalz ist.

3. Verwendung nach Anspruch 1 oder 2, wobei der Tee grüner Tee, halbfermentierter Tee oder schwarzer Tee ist.

4. Verwendung nach einem der Ansprüche 1 bis 3, wobei das Mittel zur Verbesserung des Teegeschmacks in einem verpackten Teegetränk enthalten ist.

5. Verwendung nach Anspruch 4, wobei das verpackte Teegetränk durch Zugabe des Salzes von Pyrrolochinolinchinon zu einem Extrakt aus einem Teeblatt hergestellt worden ist.

## Revendications

1. Utilisation d'un sel de pyrroloquinoléine quinone en tant qu'agent d'amélioration du goût du thé comprenant 10 à 210 mg/l du sel de pyrroloquinoléine quinone en tant qu'ingrédient actif par litre de thé.

2. Utilisation selon la revendication 1, dans laquelle le sel de pyrroloquinoléine quinone est le sel disodique de pyrroloquinoléine quinone.

3. Utilisation selon la revendication 1 ou 2, dans laquelle le thé est du thé vert, du thé semi-fermenté ou du thé noir.

4. Utilisation selon l'une quelconque des revendications 1 à 3, dans laquelle l'agent d'amélioration du goût du thé est compris dans une boisson au thé emballée.

5. Utilisation selon la revendication 4, dans laquelle la boisson au thé emballée est produite en ajoutant le sel de pyrroloquinoléine quinone à un extrait d'une feuille de thé.
